# EUROPÄISCHE PATENTANMELDUNG

(11) **EP 1 722 356 A1**
(43) Veröffentlichungstag der Anmeldung: **15.11.2006**
(21) Anmeldenummer: 06113506.7
(22) Anmeldetag: 04.05.2006
(51) Int. Cl.: G10K 11/16, F01N 1/02

(54) **Schalldämpfer**

(30) Priorität: 11.05.2005 DE 202005007714 U
(71) Anmelder: MANN+HUMMEL GmbH, 71638 Ludwigsburg (DE)
(72) Erfinder: Retter, Adrien, 1090, Jette (BE); Phung, Nguyen, 1780, Wemmel (BE); Armenio, Sylvie, 1090, Jette (BE); Eckloo, Marie-Christine, 08340, Vilassar de Mar (ES)

(57) **Zusammenfassung**

Die Erfindung betrifft einen Schalldämpfer mit einem Kammerresonator (18), bei dem der Kammerresonator durch ein äußeres, den schallführenden Kanal (11) in einem vorgegebenen Bereich umschließendes Gehäusevolumen (18) gebildet ist. Der schallführende Kanal (11) ist im Inneren des Gehäusevolumens in einen schallzuführenden Kanalabschnitt (11) und einen schallabführenden Kanalabschnitt (12,13) unterteilt. Wenigstens in einem der Kanalabschnitte ist innerhalb des Gehäusevolumens wenigstens eine Öffnung (16) angeordnet.

## Beschreibung

### Technisches Gebiet

Die Erfindung betrifft einen Schalldämpfer mit einem Kammerresonator nach der Gattung des Hauptanspruchs.

### Stand der Technik

Es ist bereits aus der Druckschrift "Ansauggeräuschdämpfung an Nutzfahrzeugen", Lothar Bending, ATZ, 04.04.1978, bekannt, dass an einem Schalldämpfer im Ansaugkanal eines Verbrennungsmotors ein bestimmtes Längsstück mit einem äußeren Gehäuse umgeben ist. Im Bereich dieser Gehäuseüberdeckung ist der Ansaugkanal teilweise perforiert, wodurch das zwischen dem Ansaugkanal und dem äußeren Gehäuse gebildete Volumen akustisch gekoppelt wird.

Der Erfindung liegt die Aufgabe zugrunde, einen Schalldämpfer der eingangs genannten Art so auszubilden, dass das Dämpfungsverhalten des Schalldämpfers eine im Frequenzbereich breitbandige Wirkung aufweist, wobei der Schalldämpfer einfach und günstig herstellbar sein soll.

### Offenbarung der Erfindung

Der erfindungsgemäße Schalldämpfer mit einem Kammerresonator wird durch ein äußeres, den schallführenden Kanal des Schalldämpfers in einem vorgegebenen Bereich umschließendes Gehäusevolumen gebildet. Dabei wird der schallführende Kanal im Inneren des Gehäusevolumens in einen schallzuführenden Kanalabschnitt und einen schallabführenden Kanalabschnitt unterbrochen. Die Kanalabschnitte können dabei jede beliebige Querschnittsform aufweisen, bevorzugt sind sie jedoch im Wesentlichen rund ausgebildet. Auch das umschließende Gehäusevolumen kann kreisringförmig um die jeweiligen Kanalabschnitte ausgebildet sein, es ist jedoch auch möglich, dass das Gehäusevolumen durch ein eckiges oder sonst wie geformtes Gehäuse ausgebildet wird. Weiterhin ist in wenigstens einem der Kanalabschnitte im Inneren des Gehäusevolumens wenigstens eine Öffnung angeordnet. Durch eine Variation des Gehäusevolumens und / oder des Durchmessers der einzelnen Kanalabschnitte sowie der sich in dem Gehäusevolumen befindlichen wirksamen Längen der Kanalabschnitte ergibt sich eine gute Anpassung an das zu dämpfende Frequenzspektrum. Außerdem hat es sich als sehr vorteilhaft erwiesen, diese wenigstens eine Öffnung in einem der Kanalabschnitte anzuordnen, da dadurch eine deutliche Erhöhung der akustischen Wirkung erzielt wird. Durch die Trennung des schallführenden Kanals im Inneren des Gehäusevolumens in einen schallzuführenden und einen schallabführenden Kanal ergibt sich eine im Frequenzbereich breitbandigere Wirkung des Resonators. Bevorzugt wird der Schalldämpfer als Hochfrequenzresonator, insbesondere für aufgeladene Motoren angewendet und dabei in den luftführenden Teilen der Ansauganlage angewendet. Er lässt sich einfach und leicht herstellen, wobei die schallführenden Kanäle beispielsweise extrudiert oder blasgeformt werden können, und das umgebende Gehäusevolumen vorzugsweise aus zwei Schalen gebildet wird, welche im Spritzgießverfahren hergestellt werden können und durch ein Schweiß- oder Klebverfahren miteinander verbunden werden können. Ebenso ist auch eine Verbindung über Klipse oder sonstige im Stand der Technik bekannte Verbindungsarten möglich.

Gemäß einer vorteilhaften Ausgestaltung der Erfindung ist die wenigstens eine Öffnung in einem der Kanalabschnitte im Wesentlichen schlitzförmig ausgestaltet. Bevorzugt ist dabei die Schlitzbreite im Verhältnis zum Durchmesser und der Wandstärke der schallführenden Kanalabschnitte möglichst gering zu halten.

Es ist vorteilhaft, wenn die wenigstens eine schlitzförmige Öffnung in axialer Richtung der Kanalabschnitte angeordnet ist. Bevorzugt erstreckt sich dabei die schlitzförmige Öffnung von einer inneren Gehäusewand des Gehäusevolumens bis zum Ende des schallführenden Kanalabschnittes. Weiterhin weisen beide Kanalabschnitte, also der schallzuführende Kanalabschnitt und der schallabführende Kanalabschnitt, diese axiale schlitzförmige Öffnung auf, wobei beide Öffnungen sich bis in das Ende der jeweiligen Kanalabschnitte erstrecken.

In einer alternativen Ausgestaltung dazu ist die wenigstens eine schlitzförmige Öffnung in radialer Richtung der Kanalabschnitte angeordnet. Dabei erstreckt sich die schlitzförmige Öffnung bevorzugt bis zum halben Durchmesser des jeweiligen Kanalabschnittes. Auch hier ist es vorteilhaft, wenn beide Kanalabschnitte diese schlitzförmige Öffnung aufweisen. Durch die Länge und / oder die Breite der schlitzförmigen Öffnung lässt sich weiterhin ein Einfluss auf das zu dämpfende Frequenzspektrum tätigen. Dadurch kann es in bestimmten Anwendungsformen durchaus erforderlich sein, die schlitzförmige Öffnung nur sehr kurz oder sehr lang auszuführen.

In einer weiteren dazu alternativen Ausgestaltung sind in den Kanalabschnitten schlitzförmige Öffnungen in axialer und radialer Richtung der Kanalabschnitte angeordnet. Auch hierdurch lassen sich einzelne gewünschte schmale Frequenzbereiche besonders in die Dämpfungscharakteristik mit einbeziehen.

In einer vorteilhaften Ausgestaltung der Erfindung weisen die Kanalabschnitte innerhalb des Gehäusevolumens sich voneinander unterscheidende Durchmesser auf. Auch durch die Vorgabe unterschiedlicher Durchmesser der Kanalabschnitte und / oder der Wahl eines vorgegebenen Abstandes zwischen den Enden der Kanalabschnitte im Inneren des Gehäusevolumens lassen sich bestimmte Effekte über den zu dämpfenden Frequenzbereich erzielen.

Gemäß einer weiteren vorteilhaften Ausgestaltung der Erfindung weisen die Kanalabschnitte im Inneren des Gehäusevolumens relativ zueinander unterschiedliche Längen auf. Auch diese Maßnahme dient der Abstimmung des Schalldämpfers auf den gewünschten Frequenzbereich.

Wie eingangs erwähnt ist es besonders vorteilhaft, die einzelnen Teile des Schalldämpfers aus einem spritzgießfähigen Material zu fertigen, insbesondere sei hier Polyamid 66 oder Polypropylen genannt, welche schon standardmäßig im Bereich von schallführenden Leitungen und Kanälen verwendet werden. Die einzelnen Teile können dann entweder im Spitzgießverfahren oder im Extrusionsverfahren bzw. Extrusionsblasformverfahren hergestellt werden. Diese Technologie ist einfach und preisgünstig und hat den Vorteil, dass die sich hieraus ergebenden Schalldämpfer ein geringes Gewicht aufweisen.

Zur breitbandigeren Abstimmung der Schalldämpfer ist es weiterhin vorteilhaft, in Strömungsrichtung mehrere Gehäusevolumina als Kammerresonatoren in Reihe hintereinander anzuordnen. Dabei können sich die Gehäusevolumina im Volumen und in der Form voneinander unterscheiden, wodurch sich speziell einzelne Frequenzbereiche beeinflussen lassen, welches zu einem sehr breitbandigen Schalldämpfer führt.

Gemäß einer vorteilhaften Ausgestaltung der Erfindung sind die einzelnen Gehäusevolumina durch jeweils eine gemeinsame Wand voneinander getrennt. Dieses ist zu vergleichen mit einem großen Gehäusevolumen, welches durch im Gehäusevolumen angeordnete Wandungen, welche radial zur Strömungsrichtung angeordnet sind, in einzelne Kammern getrennt wird, wobei jede Kammer wiederum ein einzelnes Gehäusevolumen darstellt.

Es ist jedoch genauso gut auch möglich, dass die Gehäusevolumina jeweils eigene Außenwände aufweisen und über Kanalabschnitte miteinander verbunden sind. Hier ist es möglich, über lösbare Verbindungen der Kanalabschnitte zwischen den Gehäusevolumina in Art eines Baukastensystems für verschiedene Brennkraftmaschinen und verschiedene Kundenwünsche angepasste Lösungen zu realisieren.

### Kurze Beschreibung der Zeichnungen

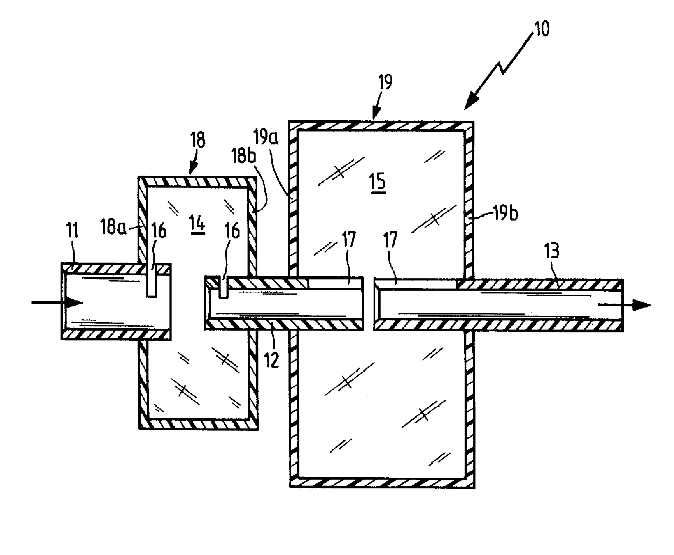

Die einzige Figur zeigt einen erfindungsgemäßen Mehrkammerresonator im Schnitt.

### Ausführungsform(en) der Erfindung

Die Figur zeigt einen Schalldämpfer 10 mit einem schallzuführenden Kanalabschnitt 11, einem Verbindungskanalabschnitt 12 und einem schallabführenden Kanalabschnitt 13. Die Querschnittsform der einzelnen Kanalabschnitte ist dabei bevorzugt rund, kann jedoch auch jede andere Form einnehmen, z. B. eckig, oval oder sonstige. Der schallzuführende Kanalabschnitt 11 wird akustisch mit dem Verbindungskanalabschnitt 12 über ein erstes Gehäusevolumen 14 verbunden. Dabei mündet der schallzuführende Kanalabschnitt 11 in das erste Gehäusevolumen 14 und wird dichtend unlösbar mit diesem verbunden. Die Verbindung kann beispielsweise über ein Kleb- oder Schweißverfahren erfolgen. Bevorzugt auf der dem schallzuführenden Kanalabschnitt 11 gegenüberliegenden Seite des ersten Gehäusevolumens 14 wird der Verbindungskanalabschnitt 12 durch eine Öffnung im ersten Gehäusevolumen 14 aus diesem herausgeführt. Der Verbindungskanalabschnitt 12 ist ebenfalls über ein unlösbares Verbindungsverfahren, wie beispielsweise ein Schweiß- oder Klebverfahren, mit dem ersten Gehäusevolumen 14 verbunden. Im Anschluss daran mündet der Verbindungskanalabschnitt 12 in ein zweites Gehäusevolumen 15. Diesem wiederum bevorzugt gegenüberliegend ist der schallabführende Kanalabschnitt 13 angeordnet, welcher durch eine Öffnung aus dem zweiten Gehäusevolumen 15 herausgeführt wird. Auch der schallabführende Kanalabschnitt 13 ist über ein unlösbares Verbindungsverfahren analog zu den beiden anderen Kanalabschnitten mit dem zweiten Gehäusevolumen verbunden. Die Durchmesser der einzelnen Kanalabschnitte müssen dabei nicht gleich und auch nicht konzentrisch aufeinander ausgerichtet sein. In diesem Beispiel liegen die Kanalabschnitte 11, 12, 13 zwar konzentrisch in einer Reihe hintereinander, jedoch ist der Durchmesser des schallzuführenden Kanalabschnittes 11 größer gewählt als die Durchmesser des Verbindungskanalabschnitts 12 und des schallabführenden Kanalabschnitts 13. Auch die Länge der in den Gehäusevolumen 14, 15 hineinragenden Kanalabschnitte 11, 12, 13 ist in diesem Ausführungsbeispiel nicht gleich, sie kann jedoch entsprechend dem gewünschten Abstimmungsverhalten variiert werden. Die in das erste Gehäusevolumen 14 hineinragenden Kanalabschnitte 11, 12 weisen jeweils einen Radialschlitz 16 auf. Dieser ist beim schallzuführenden Kanalabschnitt 11 nahe zu einer Gehäusewandung 18a des ersten Gehäusevolumens 14 angeordnet. Dahingegen ist der Radialschlitz 16 des Verbindungskanalabschnitts 12 etwas weiter von der Gehäusewandung 18b entfernt. Durch eine Variation der Breite des Radialschlitzes 16, der Länge des Radialschlitzes 16 oder der Anordnung im Verhältnis zur Gehäusewand 18a, 18b ist es möglich, einen Einfluss auf das zu dämpfende Frequenzband zu nehmen. Der Verbindungskanalabschnitt 12 mündet durch eine Öffnung in einer zweiten Gehäusewandung 19 des zweiten Gehäusevolumens 15 in dieses und weist ebenso wie der schallabführende Kanalabschnitt 13 im Inneren des zweiten Gehäusevolumens 15 jeweils einen Axialschlitz 17 auf. Dieser wird bevorzugt jeweils bis in das Ende der Kanalabschnitte innerhalb des Gehäusevolumens 15 geführt. Auch hier lässt sich durch Variation der Schlitzlänge, der Schlitzbreite und der Anordnung im Bezug zur Gehäusewandung 19a, 19b ein Einfluss auf den Frequenzbereich des zu dämpfenden Frequenzbandes nehmen. Die einzelnen Kanalabschnitte 11, 12, 13 und die Gehäusewandungen 18, 19 sind hierbei bevorzugt aus einem Kunststoff hergestellt und können so einfach und günstig im Spritzgieß- oder Extrusionsverfahren hergestellt werden. Der erfindungsgemäße Schalldämpfer 10 wird in diesem Ausführungsbeispiel von links nach rechts (angedeutet durch die Pfeile) durchströmt und ist bevorzugt im Luftansaugbereich einer Brennkraftmaschine, insbesondere einer aufgeladenen Brennkraftmaschine angeordnet. In diesem Ausführungsbeispiel weisen die beiden Gehäusevolumina 14, 15 jeweils eigene Gehäusewandungen 18, 19 auf, es ist jedoch auch möglich, dass diese an ihrer einander zugewandten Seite nur eine einzige Gehäusewandung aufweisen. Es ist selbstverständlich, dass es genauso gut möglich ist, einen Schalldämpfer 10 anzugeben, bei welchem nur Radialschlitze oder nur Axialschlitze in den jeweiligen Kanalabschnitten angeordnet sind. Eine Variation der Gehäusevolumina 14, 15, wie in diesem Beispiel angegeben, wirkt sich ebenfalls auf den zu dämpfenden Frequenzbereich aus.

## Patentansprüche

1. Schalldämpfer mit einem Kammerresonator, bei dem der Kammerresonator durch ein äußeres, den schallführenden Kanal in einem vorgegebenen Bereich umschließendes Gehäusevolumen gebildet ist, wobei der schallführende Kanal im Inneren des Gehäusevolumens in einen schallzuführenden Kanalabschnitt und einen schallabführenden Kanalabschnitt unterbrochen ist, **dadurch gekennzeichnet, dass** wenigstens in einem der Kanalabschnitte innerhalb des Gehäusevolumens wenigstens eine Öffnung angeordnet ist.

2. Schalldämpfer nach Anspruch 1, **dadurch gekennzeichnet, dass** die Öffnung im Wesentlichen schlitzförmig ausgestaltet ist.

3. Schalldämpfer nach Anspruch 2, **dadurch gekennzeichnet, dass** die schlitzförmige Öffnung in axialer Richtung der Kanalabschnitte angeordnet ist.

4. Schalldämpfer nach Anspruch 2, **dadurch gekennzeichnet, dass** die schlitzförmige Öffnung in radialer Richtung der Kanalabschnitte angeordnet ist.

5. Schalldämpfer nach Anspruch 2, **dadurch gekennzeichnet, dass** in den Kanalabschnitten schlitzförmige Öffnungen in axialer und radialer Richtung der Kanalabschnitte angeordnet sind.

6. Schalldämpfer nach einem der vorhergehenden Ansprüche, **dadurch gekennzeichnet, dass** die Kanalabschnitte innerhalb des Gehäusevolumens sich voneinander unterscheidende Durchmesser aufweisen.

7. Schalldämpfer nach einem der vorhergehenden Ansprüche, **dadurch gekennzeichnet, dass** die Kanalabschnitte innerhalb des Gehäusevolumens unterschiedliche Längen aufweisen.

8. Schalldämpfer nach einem der vorhergehenden Ansprüche, **dadurch gekennzeichnet, dass** die Kanalabschnitte und das Gehäusevolumen aus einem spritzgießfähigen Material gefertigt sind.

9. Schalldämpfer nach einem der vorhergehenden Ansprüche, **dadurch gekennzeichnet, dass** in Strömungsrichtung mehrere Gehäusevolumina als Kammerresonatoren in Reihe hintereinander angeordnet sind.

10. Schalldämpfer nach Anspruch 9, **dadurch gekennzeichnet, dass** die Gehäusevolumina durch jeweils eine gemeinsame Wand voneinander getrennt sind.

11. Schalldämpfer nach Anspruch 9, **dadurch gekennzeichnet, dass** die Gehäusevolumina jeweils eigene Außenwände aufweisen und über Kanalabschnitte miteinander verbunden sind.
